# EUROPEAN PATENT APPLICATION

(11) **EP 4 280 030 A1**
(43) Date of publication of application: **22.11.2023**
(21) Application number: 23164093.9
(22) Date of filing: 24.03.2023
(51) Int. Cl.: G06F 1/26, H04W 88/06

(54) **NETWORK DEVICE**

(30) Priority: 16.05.2022 TW 111118165
(71) Applicant: Pegatron Corporation, Taipei City 112 (TW)
(72) Inventor: TSAO, Ying-Kun, 112 Taipei City (TW)
(74) Representative: Viering, Jentschura & Partner mbB Patent- und Rechtsanwälte

(57) **Abstract**

A network device (A1,A2) includes a first connection port (2), a second connection port (3), and a power management module (1). The power management module (1) is electrically connected to the first connection port (2) and the second connection port (3). The power management module (1) provides, receives, or simultaneously provides and receives power through at least one of the first connection port (2) and the second connection port (3).

## Description

### FIELD OF THE DISCLOSURE

The present disclosure relates to a network device, and more particularly to a network device that supports cellular internet.

### BACKGROUND OF THE DISCLOSURE

A wireless network device currently available on the market is based on a fifth-generation mobile communication technology (5G). The wireless network device has a universal serial bus (USB) port. When a user connects a USB port of an electronic device to the USB port of the wireless network device through a transmission line, the electronic device is connected to a network through the wireless network device, and the power required for an operation of the wireless network device is provided by a battery of the electronic device.

While an internet speed of the fifth-generation mobile communication technology (5G) is increased, the power consumption of the fifth-generation mobile communication technology is also high. If the power required for the operation of the wireless network device comes only from the electronic device, the wireless network device cannot provide an internet service for a long period of time. In addition, USB ports of some manufacturing machines and old computer hosts are not capable of providing sufficient power to support a long-term operation of the wireless network device.

### SUMMARY OF THE DISCLOSURE

In response to the above-referenced technical inadequacies, the present disclosure provides a network device.

In order to solve the above-mentioned problems, one of the technical aspects adopted by the present disclosure is to provide a network device. The network device includes a first connection port, a second connection port, and a power management module electrically connected to the first connection port and the second connection port. The power management module provides, receives, or simultaneously provides and receives power through at least one of the first connection port and the second connection port.

Therefore, in the network device provided by the present disclosure, the power management module can determine whether one or more connection ports are currently used for receiving and/or providing power according to electrical information of the connection port. In this way, the network device can obtain sufficient power.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
FIG. 1 is a functional block diagram of a network device according to a first embodiment of the present disclosure;
FIG. 2 is a schematic view showing a first operational scenario of the network device of FIG. 1;
FIG. 3 is a schematic view showing a second operational scenario of the network device of FIG. 1;
FIG. 4 is a schematic view showing a third operational scenario of the network device of FIG. 1;
FIG. 5 is a functional block diagram of a network device according to a second embodiment of the present disclosure;
FIG. 6 is a schematic view showing an operational scenario of the network device of FIG. 5; and
FIG. 7 is a functional block diagram of a network device according to a third embodiment of the present disclosure.

### DETAILED DESCRIPTION OF THE EXEMPLARY EMBODIMENTS

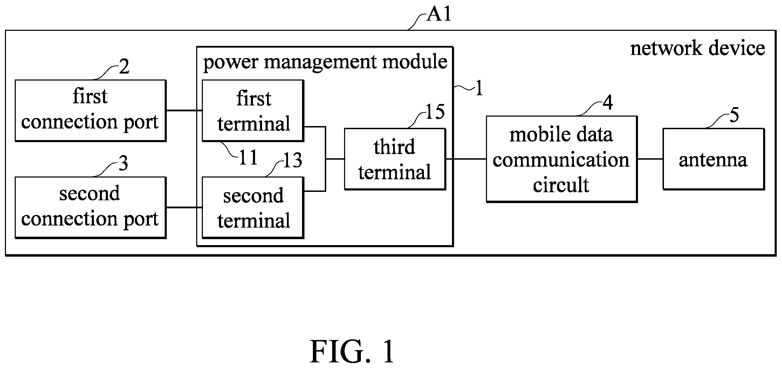

FIG. 1 is a functional block diagram of a network device according to a first embodiment of the present disclosure. Referring to FIG. 1, a network device A1 includes a power management module 1, a first connection port 2, a second connection port 3, a mobile data communication circuit 4, and an antenna 5. The power management module 1 is electrically connected to the first connection port 2 and the second connection port 3. The mobile data communication circuit 4 is electrically connected to the power management module 1 and the antenna 5. The antenna 5 is used to send and receive wireless signals, and the mobile data communication circuit 4 is used to process the wireless signals transmitted and received by the antenna 5. The power management module 1 is, for example, one or any combination of an application-specific integrated circuit (ASIC), a field programmable gate array (FPGA), and a system-on-chip (SOC), and may include other relevant circuit elements (e.g., a boost-buck circuit and a logic circuit) and cooperate with firmware to perform the following functional operations. The first connection port 2 and the second connection port 3 are, for example, two Universal Serial Bus (USB) Type-C interfaces, but are not limited thereto.

The power management module 1 includes a first terminal 11, a second terminal 13, and a third terminal 15. The power management module 1 is, for example, a chip, and the first terminal 11, the second terminal 13, and the third terminal 15 are three electrical pins of the chip. The first terminal 11 and the second terminal 13 are electrically connected to the first connection port 2 and the second connection port 3, respectively; the third terminal 13 is electrically connected to the mobile data communication circuit 4; and the power management module 1 can provide power to the mobile data communication circuit 4.

However, the aforementioned description for the network device of the first embodiment is merely an example, and is not meant to limit the scope of the present disclosure.

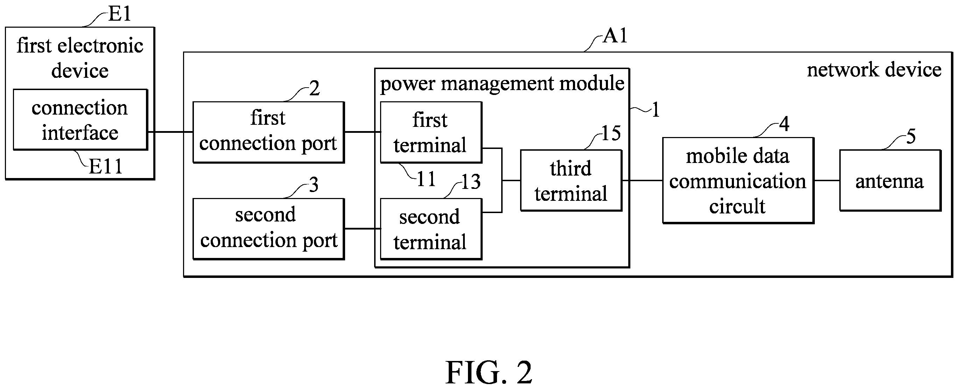

FIG. 2 is a schematic view showing a first operational scenario of the network device of FIG. 1. Referring to FIG. 2, a first electronic device E1 is provided with a connection interface E11, and the connection interface E11 is, for example, a Universal Serial Bus Type-C interface (but not limited thereto). When the first connection port 2 of the network device A1 is electrically connected to the connection interface E11 of the first electronic device E1, the first electronic device E1 provides power to the power management module 1 through the first connection port 2, and the power management module 1 provides power to the mobile data communication circuit 4. The mobile data communication circuit 4 transmits the wireless signals to the first electronic device E1 through the first connection port 2.

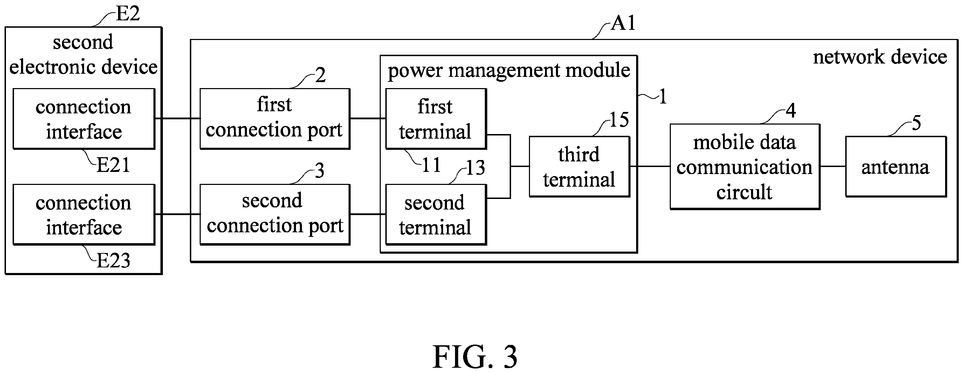

FIG. 3 is a schematic view showing a second operational scenario of the network device of FIG. 1. Referring to FIG. 3, a second electronic device E2 is provided with two connection interfaces E21 and E23, and the two connection interfaces E21 and E23 are, for example, two Universal Serial Bus Type-A interfaces (but not limited thereto). When the first connection port 2 and the second connection port 3 of the network device A1 are electrically connected to the two connection interfaces E21 and E23 of the second electronic device E2, respectively, at the same time, the second electronic device E2 provides power to the power management module 1 through the first connection port 2 and the second connection port 3, and the power management module 1 provides power to the mobile data communication circuit 4. The mobile data communication circuit 4 transmits the wireless signals to the second electronic device E2 through the first connection port 2 or the second connection port 3.

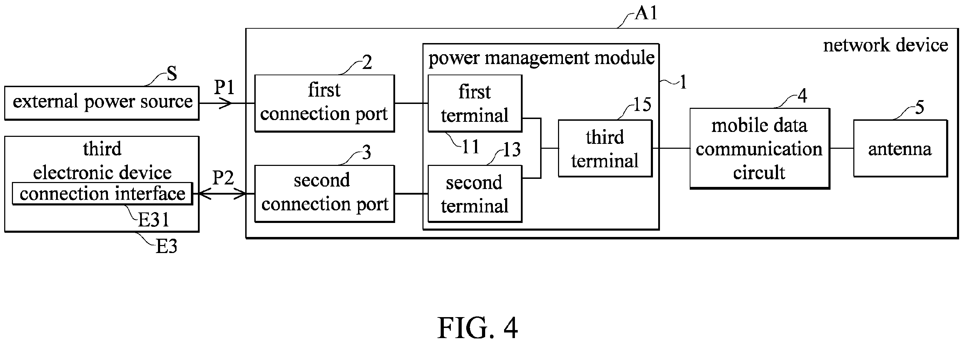

FIG. 4 is a schematic view showing a third operational scenario of the network device of FIG. 1. Referring to FIG. 4, a third electronic device E3 is provided with a connection interface E31. The connection interface E31 is, for example, a Universal Serial Bus (USB) Type-C interface or a USB Type-A interface, but is not limited thereto. An external power source S is, for example, a portable power supply. When the first connection port 2 and the second connection port 3 of the network device A1 are electrically connected to the external power source S and the connection interface E31 of the third electronic device E3, respectively, the power management module 1 of the network device A1 obtains a first power P1 (e.g., a voltage multiplied by a current) of the external power source S through the first connecting port 2, and obtains a second power P2 of the third electronic device E3 through the second connecting port 3. In this way, whether the external power source S is a fixed power source or a variable power source can be determined, and a maximum voltage and a current limit of the external power source S can be determined as well. That is to say, the power management module 1 determines a distribution of power provided by the external power source S and the third electronic device E3 according to the power consumption of the mobile data communication circuit 4. When the power management module 1 determines that the power of the external power source S (e.g., the fixed power source) is not sufficient for the mobile data communication circuit 4, not only does the external power source S provide power to the power management module 1 through the first connection port 2, but the third electronic device E3 also provides power to the power management module 1 through the second connection port 3. Then, the power management module 1 provides power to the mobile data communication circuit 4.

When the power management module 1 determines that the external power source S (e.g., the variable power source) is able to provide sufficient power required by the mobile data communication circuit 4, the external power source S provides power to the power management module 1 through the first connection port 2, and then the power management module 1 provides power to the mobile data communication circuit 4. Simply speaking, if the external power source S alone can provide sufficient power to the mobile data communication circuit 4, the power required by the mobile data communication circuit 4 is only provided by the external power source S.

When the power management module 1 determines that the power provided by the external power source S (e.g., the variable power source) is sufficient for the mobile data communication circuit 4 and a voltage of the third electronic device E3 is low, the external power source S provides power to the power management module 1 through the first connection port 2, and the power management module 1 provides power to the third electronic device E3 through the second connection port 3. The power management module 1 further provides power to the mobile data communication circuit 4, and the mobile data communication circuit 4 transmits the wireless signals to the third electronic device E3 through the second connection port 3. In this embodiment, if the power demand from the third electronic device E3 is high, the power management module 1 firstly determines whether or not the power of the external power source S is sufficient for the mobile data communication circuit 4. Only after the power of the external power source S is determined to be sufficient for the mobile data communication circuit 4, does the external power source S provide fixed power to the third electronic device E3. In other words, not only can the network device A1 receive power from the external power source S, but the network device A1 can also provide power to the third electronic device E3.

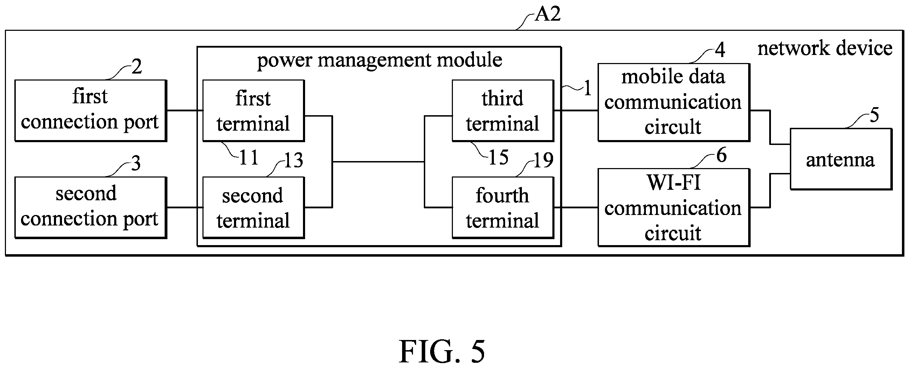

FIG. 5 is a functional block diagram showing a network device according to a second embodiment. Compared with the network device A1 of FIG. 1, a network device A2 of FIG. 5 further includes a WI-FI communication circuit 6, and the power management module 1 further includes a fourth terminal 19. The power management module 1 of the network device A2 is, for example, a chip, and the fourth terminal 19 is an electrical pin of the chip. The WI-FI communication circuit 6 is electrically connected to the fourth terminal 19 of the power management module 1 and the antenna 5.

However, the aforementioned description for the network device of the second embodiment is merely an example, and is not meant to limit the scope of the present disclosure.

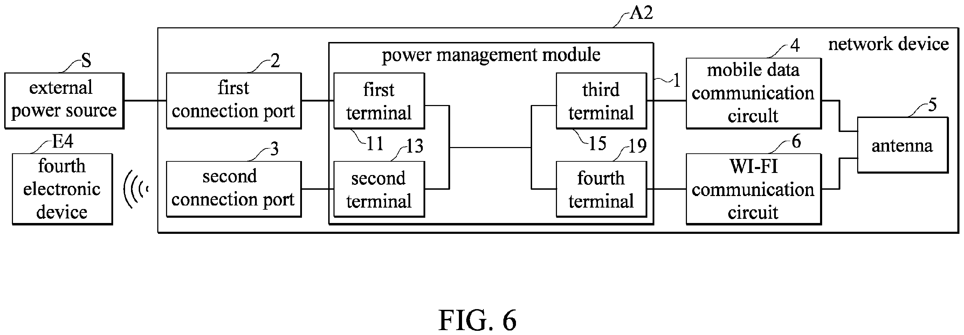

FIG. 6 is a schematic view showing an operational scenario of the network device of FIG. 5. Referring to FIG. 6, when the first connection port 2 of the network device A2 is electrically connected to the external power source S, the external power source S provides power to the power management module 1 through the first connection port 2, and the power management module 1 provides power to the mobile data communication circuit 4 and the WI-FI communication circuit 6. The network device A2 transmits the wireless signal to a fourth electronic device E4 through the mobile data communication circuit 4 or the WI-FI communication circuit 6.

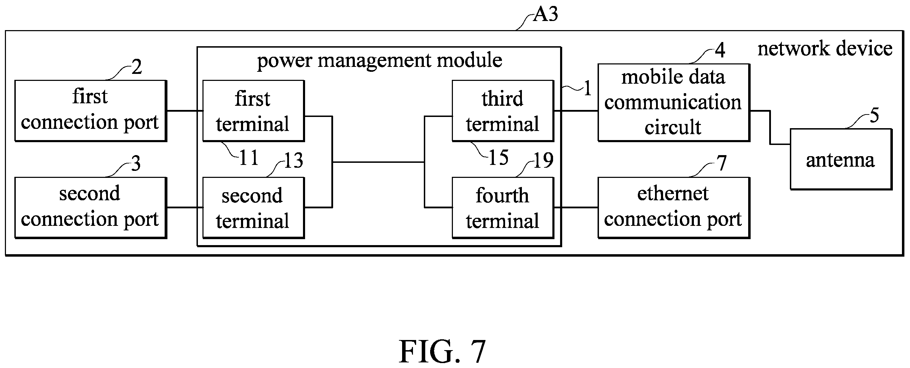

FIG. 7 is a functional block diagram of a network device according to a third embodiment of the present disclosure. Compared with the network device A1 of FIG. 1, a network device A3 of FIG. 7 further includes an Ethernet connection port 7, and the power management module 1 further includes the fourth terminal 19. The power management module 1 of the network device A3 is, for example, a chip, and the fourth terminal 19 is an electrical pin of the chip. The fourth terminal 19 is electrically connected to the Ethernet connection port 7.

However, the aforementioned description for the network device of the third embodiment is merely an example, and is not meant to limit the scope of the present disclosure.

### [Beneficial Effects of the Embodiments]

In conclusion, in the network device provided by the present disclosure, the external power source or the electronic device can provide power to the network device. When the power of the external power source or the electronic device alone is not sufficient, the external power source and the electronic device can simultaneously provide power to the network device. Moreover, when the external power source provides power to the network device, the network device can also provide power to the electronic device at the same time.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A network device (A1,A2), **characterized by** comprising:
a first connection port (2);
a second connection port (3); and
a power management module (1) electrically connected to the first connection port (2) and the second connection port (3);
wherein the power management module (1) provides, receives, or simultaneously provides and receives power through at least one of the first connection port (2) and the second connection port (3).

2. The network device according to claim 1, further comprising a mobile data communication circuit (4) electrically connected to the power management module (1), wherein the mobile data communication circuit (4) is configured to process a wireless signal, and the power management module (2) provides the power to the mobile data communication circuit (4).

3. The network device according to claim 1 or 2, wherein, when the first connection port (2) is electrically connected to an external power source (S), the power management module (1) receives the power through the first connection port (2).

4. The network device according to claim 2, wherein, when the first connection port (2) is electrically connected to an electronic device (E1), the power management module (1) receives the power through the first connection port (2), and the mobile data communication circuit (4) transmits the wireless signal to the electronic device (E1) through the first connection port (2).

5. The network device according to claim 2, wherein, when the first connection port (2) and the second connection port (3) are electrically connected to an electronic device (E2) at a same time, the power management module (1) receives the power through the first connection port (2) and the second connection port (3), and the mobile data communication circuit (4) transmits the wireless signal to the electronic device (E2) through the first connection port (2) or the second connection port (3).

6. The network device according to claim 2, wherein, when the first connection port (2) and the second connection port (3) are electrically connected to an external power source (S) and an electronic device (E3), respectively, the power management module (1) receives the power through the first connection port (2) and provides the power to the electronic device (E3) through the second connection port (3), and the mobile data communication circuit (4) transmits the wireless signal to the electronic device (E3) through the second connection port (3).

7. The network device according to claim 2, wherein, when the first connection port (2) and the second connection port (3) are electrically connected to an external power source (S) and an electronic device(E4), respectively, the power management module (1) receives the power through the first connection port (2) and the second connection port (3), and the mobile data communication circuit (4) transmits the wireless signal to the electronic device (E4) through the second connection port (3).
